# EUROPÄISCHE PATENTSCHRIFT

(11) **EP 2 081 725 B1**
(45) Veröffentlichungstag und Bekanntmachung des Hinweises auf die Patenterteilung: **21.12.2011**
(21) Anmeldenummer: 07819044.4
(22) Anmeldetag: 16.10.2007
(51) Int. Cl.: B23K 9/32

(54) **VORRICHTUNG ZUM SCHWEIßEN VON BANDMATERIAL MIT EINER ABSAUGVORRICHTUNG**
DEVICE FOR WELDING A STRIP OF MATERIAL, COMPRISING A SUCTION DEVICE
DISPOSITIF POUR SOUDER UN MATÉRIAU EN BANDE ÉQUIPÉ D'UN DISPOSITIF D'ASPIRATION

(30) Priorität: 16.10.2006 DE 102006049421
(43) Veröffentlichungstag der Anmeldung: 29.07.2009
(73) Patentinhaber: Leicht Stanzautomation GmbH, 75015 Bretten (DE)
(72) Erfinder: HERZFELD, Wolfgang, 75228 Ispringen (DE)
(74) Vertreter: Reinhardt, Harry
(86) Internationale Anmeldenummer: PCT/EP2007/008976
(87) Internationale Veröffentlichungsnummer: WO 2008/046591

(56) Entgegenhaltungen:
- DE-A1- 4 236 236
- US-A- 5 491 320
- STAUFFER H: "WELDING-FUME EXTRACTION AT THE TORCH - EFFECTIVE FOR WELDING WITH INDUSTRIAL ROBOTS" WELDING AND CUTTING, DVS GERMAN WELDING SOCIETY, DUSSELDORF, DE, Nr. 5, 2002, Seiten 238-240, XP001163486 ISSN: 1612-3433

## Beschreibung

Die Erfindung befasst sich mit einer Vorrichtung zum Schweißen von Bandmaterial umfassend einen Führungsarm zum Führen mindestens einer Schweißelektrode und mit einer Absaugvorrichtung zum Absaugen von Gasen nach dem Oberbegriff des Anspruchs 1.

### Stand der Technik

Eine derartige Bandschweißvorrichtung ist aus US-A 5 491 320 bekannt und wird benötigt, um Rohmaterialbänder, die in Bandwickeln zwecks Weiterverarbeitung in Werkzeugautomaten angeliefert werden, endlos aneinander zu schweißen, wobei die Schweißstelle keine Störungen beim nachfolgenden Bearbeitungsprozess verursachen darf. Derartige Bandschweißvorrichtungen besitzen üblicherweise eine Bandaufnahme zur Aufnahme der Bänder, eine Schneideinrichtung zum Beschneiden der Bandenden sowie eine Schweißeinrichtung zum Verschweißen der beschnittenen Enden. Außerdem weisen solche Vorrichtungen in der Regel auch eine Absaugvorrichtung zum Absaugen der beim Schweißen hervorgebrachten Gase auf. Hierzu ist an einem schwenkbaren Führungsarm für die Schweißelektrode ein Absaugstutzen nahe der Schweißelektrode vorgesehen, der in einen Absaugschlauch übergeht. (s.a. Stauffer H.: "Welding-fume extraction at the torch - Effective for welding with industrial robots" WELDING AND CUTTING, DVS GERMAN WELDING SOCIETY, Düsseldorf, DE, Nr. 5, 2002, Seiten 238-240, XP0012163486 ISSN: 1612-3433)

Eine vergleichbare Bandschweißvorrichtung ist aus der DE-A 42 36 171 bekannt. Dort befindet sich die Gasabsaugung in der Geräteabdeckung. Diese Gasabsaugung ist, da sie relativ weit entfernt von der eigentlichen Schweißstelle ist, in der Regel ineffizient und führt dazu, dass gerade bei nicht geschlossenen Geräteabdeckungen der Maschinenführer weiterhin mit beim Schweißvorgang benutzten und/oder entstehenden Gasen belastet wird.

EP 0 882 538 A2 zeigt eine Schweißzange zur Herstellung einer Kraftfahrzeugskarosserie, wobei die Schweißzangenarme Absaugkanäle aufweisen, die mit einem Sauglufteinlass verbunden sind. Der Sauglufteinlass ist so angeordnet, dass die beim Schweißen entstehenden Rauchgase durch den Sauglufteinlass eingesaugt und mittels der Absaugkanäle von der Schweißstelle wegtransportiert werden.

DE 42 36 171 A1 zeigt eine Bandschweißvorrichtung zum Schneiden und Schweißen von Metallbändern.

DE 41 00 302 C1 offenbart eine Bandschweißmaschine zum Schweißen von gestoßenen Schnittflächen an jeweils dem Bandanfang und dem Bandende von Metallbändern.

### Aufgabe der Erfindung

Die Aufgabe der Erfindung ist es nun, eine kostengünstigere und/oder effektivere Absaugung von Gasen bei einer Schweißvorrichtung bereitzustellen.

Die Aufgabe wird durch eine Vorrichtung mit den Merkmalen des Anspruches 1 gelöst.

Die Absaugöffnung kann in oder an dem Führungsarm angeordnet sein, um mitbewegt zu werden. Es ist aber darüber hinaus auch denkbar die Absaugöffnung beabstandet vom Führungsarm anzuordnen und über einen Mechanismus mit dem Führungsarm mit zu bewegen. Dabei ist es für den Fachmann selbstverständlich, dass sowohl Absaugöffnungen, die als eigenes Teil am Führungsarm angebracht sind, als auch Absaugöffnungen die Teil des Führungsarms sind, dieser Erfindung entsprechen. Es ist ebenfalls im Sinne der Erfindung, wenn die Absaugöffnung mit der Achse des Führungsarms mitbewegt wird, indem sie an der hohlen Achse ausgebildet ist, um die der Führungsarm bewegbar ist und die den Führungsarm mit der Vorrichtung verbindet. Eine hohle Achse weist bei gleicher Steifigkeit ein geringeres Gewicht auf, sodass es gerade für die beweglichen Teile des Führungsarmes von Vorteil ist, diese hohl auszubilden. Die hohle Achse dient auch zum Transport der Gase. Dadurch muss kein weiterer Schlauch von der Absaugöffnung an das Gebläse geführt werden. So mit muss trotz verschiedener Hub- und Schwenkbewegungen nicht darauf geachtet werden, ob die Leitungsmittel zur Ableitung der abgesaugten Gase mit anderen Werkzeugen und/oder Maschinenteilen kollidieren. Die hohle Achse führt die abgeführten Gase durch eine Grundplatte in den Unterschrank der Maschine. Von dort aus können die Gase dann ungehindert zu dem Gebläse und/oder einem Filter weiter geführt werden.

Durch die Anordnung der Absaugöffnungen in oder an dem Führungsarm findet die Absaugung direkt oberhalb der Schweißstelle oder zumindest in ihrer Nähe statt, wodurch die Gase abgesaugt werden, bevor sie sich unkontrolliert in die Umgebung der Schweißelektrode ausbreiten. Da die Absaugöffnung an dem Führungsarm angebracht ist, wird sie bei Bewegungen mit dem Führungsarm auch mit bewegt. Durch diesen Umstand wird gewährleistet, dass, wenn die Schweißelektrode in eine Ruheposition gefahren ist, auch die Absaugöffnung nicht oberhalb der Bearbeitungsstelle ist. Dadurch wird die Bearbeitungsstelle für andere Werkzeuge und oder Tätigkeiten freigehalten.

Bevorzugt umfasst die Absaugvorrichtung ein Gebläse, das einen Unterdruck an der Absaugöffnung bereitstellt und die abgesaugten Gase weiterleitet. So kann die Absaugöffnung mit dem Gebläse über einen Schlauch bzw. durch einen anderen Fluidleiter verbunden sein. Zwischen der Absaugöffnung und dem Gebläse kann weiter ein Filter angebracht sein, der entsprechende Gase und/oder Flüssigkeiten und/oder Feststoffe aus dem abgesaugten Gut herausfiltert. Auch kann ein solcher Filter nach dem Gebläse angeordnet sein, sodass das abgesaugte Gut erst kurz vor dem Austritt gefiltert wird und so der Zugang zum Filter erleichtert wird.

Bedarfsweise mündet die Absaugöffnung in eine Aussparung im Führungsarm, wobei die Aussparung zu der Führung der Schweißelektrode benachbart ist und/oder diese umgibt. Insbesondere wenn die Schweißelektrode im Führungsarm gelagert ist, um Transversalbewegungen entlang des Führungsarmes auszuführen, ergibt sich in der Regel ein Zwischenraum, der die Führung der Elektrode umgibt. Diese Aussparung kann verwendet werden, um die nach oben abweichenden Gase aufzufangen und mittels der Absaugöffnung abzusaugen, die benachbart zu dieser Aussparung ist. Dies ist eine platzsparende Ausführungsform, da kein weiterer Auffangbehälter für die aufzufangenden Gase benötigt wird, was wiederum den Führungsarm graziler werden lässt.

In einer besonderen Ausführungsform sind Aktoren vorgesehen, die den Führungsarm eine Hub- und/oder Schwenkbewegung ausführen lassen können. Diese Aktoren können insbesondere Servoantriebe, wie Servomotoren mit Absolutwertgeber, sein, die von einer Rechnereinheit gesteuert werden. Insbesondere können mehrere der Aktoren von einer Rechnereinheit gesteuert werden, sodass die Hub- und/oder Schwenkbewegung insgesamt von einem Rechner zentral errechnet und gesteuert wird. Über die Achse des Führungsarms werden die Hub- und/oder Schwenkbewegungen ausgeführt, wobei die translatorischen Bewegungen der Schweißelektrode zum Beispiel über einen Aktor, der an dem Führungsarm angebracht ist, ausgeführt werden können.

Bevorzugt umfasst die Vorrichtung eine Gasleitung, die die Gase an die Außenseite einer Geräteabdeckung leitet. So können nach einer Filterung die Gase, die jetzt möglichst wenige Schadstoffe enthalten sollen, in die Maschinenhalle geleitet werden, wo sie durch die Raumluft verdünnt werden. Es ist auch möglich, die Gase außerhalb der Maschinenhalle in die Umwelt zu führen.

Weitere Vorteile ergeben sich aus den Unteransprüchen und der nachfolgenden Beschreibung eines Ausführungsbeispiels der Erfindung.

### Kurzbeschreibung der Figuren

Die Erfindung wird im Folgenden mittels eines Ausführungsbeispiels anhand der beigefügten Zeichnungen beschrieben. In den Zeichnungen zeigt:
- Figur 1: eine Gesamtvorrichtung zum Schweißen,
- Figur 2: die Vorrichtung von Figur 1 in einer anderen Perspektive,
- Figur 3: die Vorrichtung aus Figur 1, wobei das Führungsmittel sich in einer anderen Position befindet,
- Figur 4: das Führungsmittel in einer vergrößerten Darstellung,
- Figur 5: das Führungsmittel im Schnitt, in einer perspektivischen Darstellung und von unten,

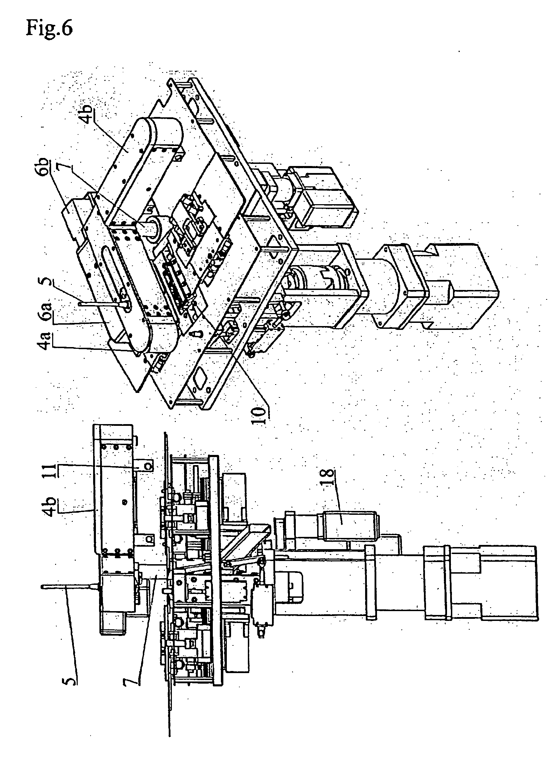

- Figur 6: die Vorrichtung ohne Gehäuse in verschiedenen Perspektiven,
- Figur 7: die Hub- und Schwenkmittel des Führungsarms,
- Figur 8: die Schneidevorrichtung.

### Beschreibung bevorzugter Ausführungsbeispiele

Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

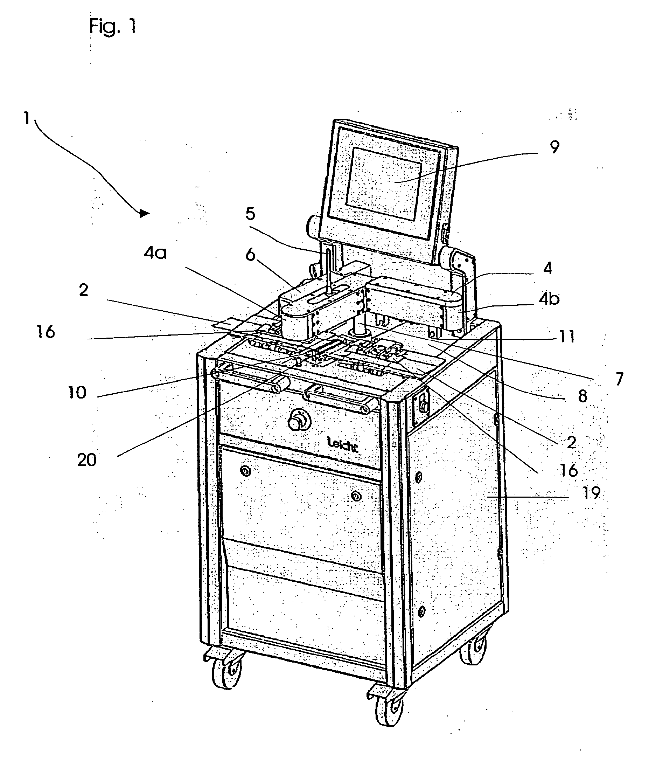

Figur 1 zeigt eine Vorrichtung 1 zum Schweißen von Bändern 2 mit einem Schweißmittel 3 umfassend mindestens eine Schweißelektrode 3a.

Dabei weist die Vorrichtung einen Führungsarm 4 zum Führen verschiedener Werkzeuge auf. Der Führungsarm umfasst zwei Schenkel 4a und 4b und eine vorzugsweise hohle Achse 7. Die Schenkel 4a, 4b und die hohle Achse 7 sind im Schnittbereich miteinander verbunden und stehen jeweils zueinander im rechten Winkel.

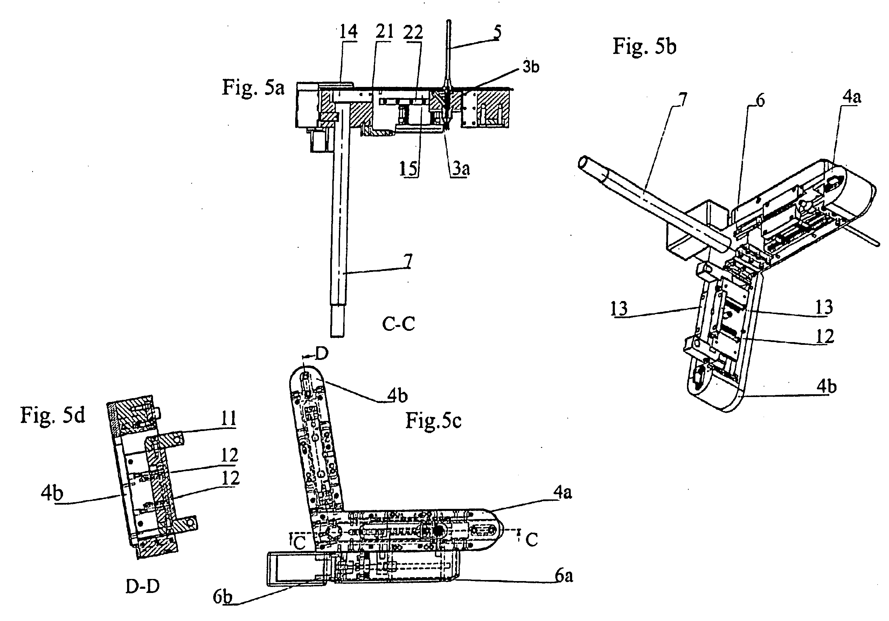

Der Schenkel 4a (Fig. 5) ist zum Führen der Schweißelektrode 3a ausgebildet. Er weist eine Aussparung 15 auf, in der die Elektrode 3a samt ihrer Halterung 3b entlang des Schenkels 4a verfahren werden kann. Dazu ist die Elektrodenhalterung 3b über ein Getriebe 6a mit einem Aktor 6b, insbesondere einem Servoantrieb verbunden. Der Servoantrieb wird über eine Steuerung mittels einer Rechnereinheit (nicht gezeigt) gesteuert.

Eine Absaugvorrichtung zum Absaugen der beim Bearbeitungsvorgang des Bands entstehenden Gase besteht aus der Aussparung 15, die über eine Absaugöffnung mit der Bohrung 14 in Verbindung steht, der hohlen Achse 7, einem oder mehreren Filtern (nicht gezeigt) zum Filtern der abgesaugten Gase und einem Gebläse wie z.B. einen Radiallüfter. Dabei sind die einzelnen Teile der Absaugvorrichtung zum Gastransport miteinander verbunden. Der oder die Filter können vor oder hinter dem Gebläse angeordnet sein.

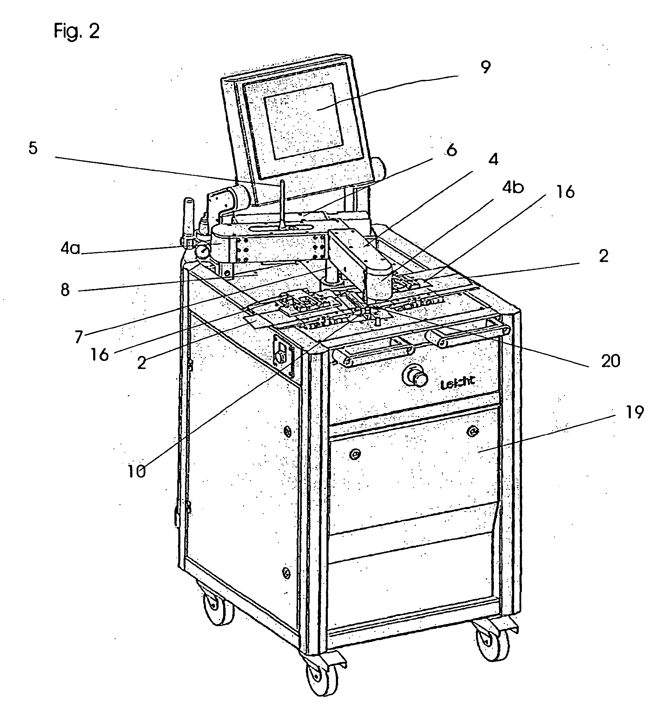

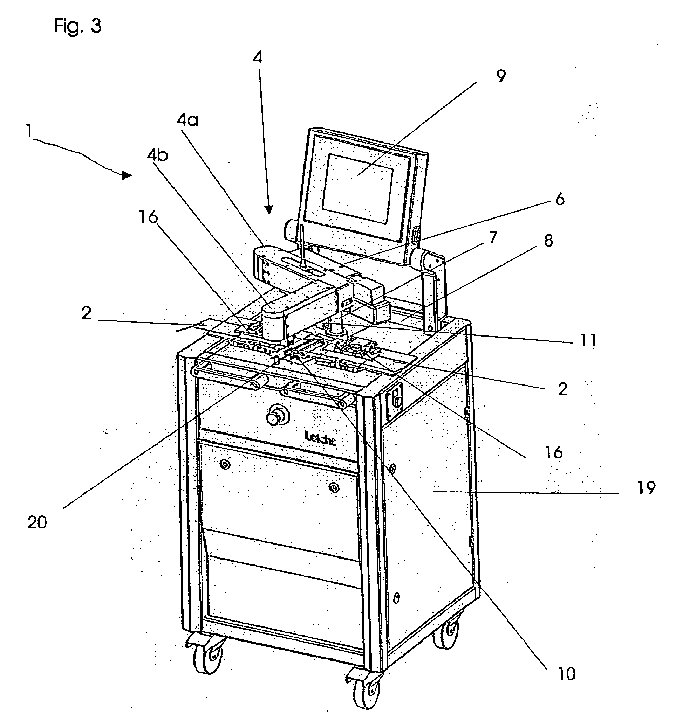

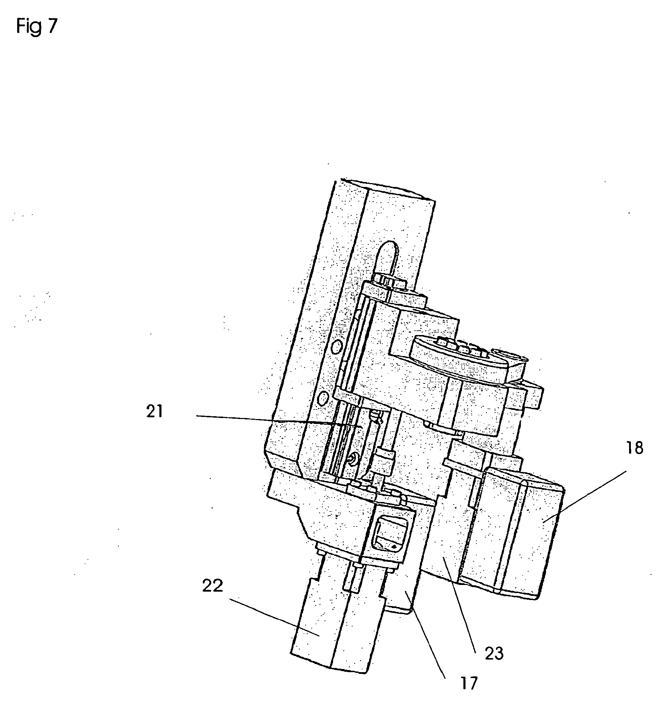

Die Schweißelektrode 3a ist in der Darstellung von Figur 1 durch den Führungsarm 4 verdeckt, der die Schweißelektrode 3a führt. Die Schweißelektrode 3a befindet sich bei dieser Ausführungsform in dem Schenkel 4a des Führungsarms 4 unter dem Stabmittel 5. Das Stabmittel 5 zeigt die Position der Schweißelektrode 3a an. Die Schweißelektrode 3a ist transversal entlang des Führungsarms 4 durch einen Antrieb 6 beweglich. Weiter ist der gesamte Führungsarm um die Achse 7 beweglich (Fig. 1 - 3) insbesondere in der Ebene parallel zur Grundplatte 8 schwenkbar und relativ zur Grundplatte 8 hebbar. Dabei ist es natürlich auch denkbar, dass der Führungsarm Bewegungen in anderen Ebenen ausführt, insbesondere, falls die Grundplatte 8 relativ zur Bandebene geneigt ist, parallel zur Bandebene. Um diese Bewegungen zu bewerkstelligen, sind an der hohlen Achse 7 Hub- und Schwenkmittel angeordnet. Das Hubmittel (Fig. 7) umfasst dabei mindestens einen Aktor 17, dem in dieser Ausführungsform ein Getriebe 22 zugeordnet ist. Der Aktor 17 und das Getriebe 22 sind dabei mit der hohlen Achse 7 in Verbindung, so dass durch die Bewegung des Aktors 17 die hohle Achse 7 entlang einer Führung 21 bewegt und somit der Führungsarm 4 angehoben oder gesenkt wird. Das Schwenkmittel umfasst ebenfalls einen Aktor 18, der mit einem Getriebe 23 mit der hohlen Achse 7 in Verbindung steht. In dieser Ausführungsform steht dabei der Aktor 18 mit dem Aktor 17 so in Verbindung, so dass der Aktor 18 bei Bewegung des Aktors 17 angehoben oder gesenkt wird. Sowohl die Hub- und Schwenkbewegungen des Führungsarms 4 als auch die Transversalbewegungen der Schweißelektrode 3a entlang des Führungsarms 4 sind über einen Bildschirm 9, der an dem Gehäuse 19 der Vorrichtung befestigt ist, kontrollier- und steuerbar.

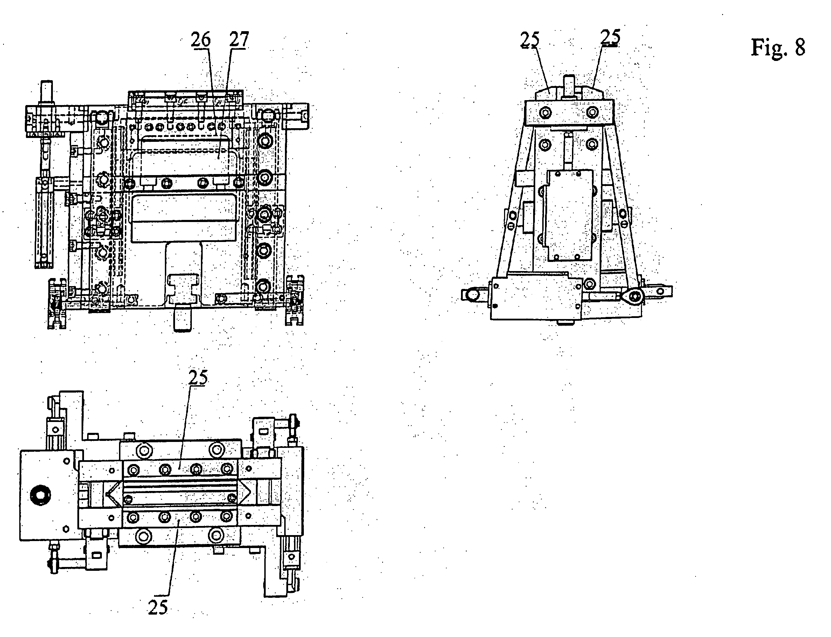

Die Schneidevorrichtung 10 (Fig. 8) befindet sich versenkbar in der Grundplatte 8. Sie umfasst eine Öffnung 27, in die die Bänder 2 eingeführt werden. An der oberen Kante der Öffnung 27 befinden sich Schneidkanten 26, die mit einem weiteren Paar Schneidkanten 25 zusammenwirken.

An dem zweiten Schenkel 4b des Führungsarms 4 (Fig. 5) ist eine Verpressbrücke 11 angeordnet. Die Verpressbrücke 11 ist ein Element eines Verpressmittels. Das Verpressmittel umfasst neben der Verpressbrücke 11 die Schneidevorrichtung 10 als weiteres Element, das mit der Verpressbrücke 11 zusammenwirkt. Diese Verpressbrücke 11 besteht aus zwei Schenkeln 11a und 11 b, die durch eine im rechten Winkel auf den beiden Schenkeln 11 a, 11 b stehende Verbindung 11 c verbunden sind. Die Verpressbrücke ist aus Metall insbesondere Stahl und so ausgeformt, dass die Verbindung 11 c auf die Schweißnaht aufgesetzt werden kann und die Schweißnaht durch Druck glättet. Die Verpressbrücke 11 ist mit mehreren Federelementen 12 an dem Führungsarm 4 angeordnet. Neben der Verpressbrücke 11 sind Niederhalter 13 platziert. Die Niederhalter 13 sind in dieser Ausführungsform statisch an dem Führungsarm 4 angeordnet, könnten aber alternativ auch mit verschiedenen Mitteln beweglich an dem Führungsarm 4 befestigt sein.

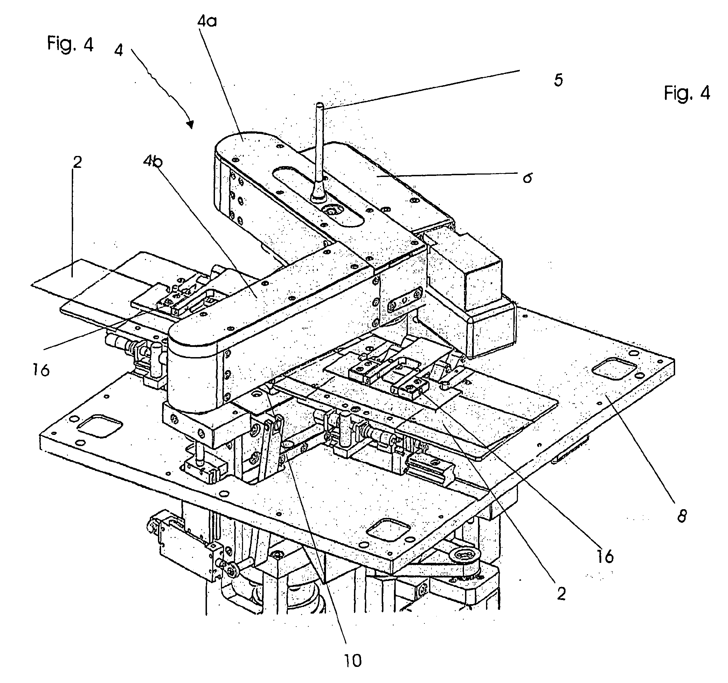

Die Vorrichtung wird wie folgt verwendet:
Die Bänder 2 werden in die Bandführungen 16 (Fig. 4) eingelegt und dort fixiert. Mittels Bandführungen werden die Enden der Bänder 2 in die Schneidöffnung 27 der Schneidevorrichtung 10 eingeführt. Dafür befindet sich die Schneidevorrichtung 10 in einer ersten Stellung, bei der sie aus der Grundplatte 8 mit der Schneidöffnung 27 herausragt. Der Führungsarm 4 wird nun mittels der Schwenkvorrichtung, umfassend einen Aktor 18 und das Getriebe 23, so verschwenkt, dass sich der Schenkel 4b über der Schneidevorrichtung 10 befindet. Durch Absenken des Schenkels 4b werden die Niederhalter 13 an der Schneidevorrichtung 10 vorbei auf die Bänder 2 gedrückt. Die Verpressbrücke 11, die sich ebenfalls in dem Schenkel 4b befindet, wird durch die Schneidevorrichtung gegen die Federelemente 12 in Richtung des Führungsarms 4 gedrückt und ragt somit nicht in den Arbeitsbereich. Die Niederhalter 13 fixieren somit die Bänder 2 direkt neben der Schneidevorrichtung 10 und gewähren einen sauberen Schnitt auch bei besonders dünnen Bändern 2. Die Schneidevorrichtung 10 wird nun in Richtung Grundplatte 8 verfahren und dabei werden die Bänder 2 zwischen den Schnittkanten 25 und 26 geschnitten.

Nach dem Schnitt wird der Führungsarm 4 mittels der Hubvorrichtung umfassend den Aktor 17 und das Getriebe 22 gehoben und so das Band 2 durch die Niederhalter 13 freigegeben. Die Schneidevorrichtung 10 wird so weit nach unten verfahren, dass die geschnittenen Bandenden nun auf der Oberseite 20 der Schneidevorrichtung 10 zusammengeführt werden können, indem die beiden Bandführungen 16 weiter zueinander verfahren werden. Der Führungsarm 4 wird nun soweit geschwenkt, bis sich der zweite Schenkel 4a, der die Schweißelektrode 3a trägt, über der Schnittkante befindet. Daraufhin wird die Schweißelektrode 3a bis zu ihrem Startpunkt entlang des Führungsarms 4 bewegt. Der Führungsarm 4 wird gesenkt und die Schweißelektrode 3a kommt auf dem Band 2 oder kurz davor zum Stehen. Durch Anlegen einer geeigneten Spannung zwischen dem Oberteil 20 der Schneidevorrichtung 10, auf dem die Schnittkante nun anliegt, und der Schweißelektrode 3a und durch Bewegen der Schweißelektrode 3a entlang des Bandes 2 entsteht nun eine Schweißnaht. Nachdem die Schweißnaht gefertigt worden ist, kann diese wahlweise auch noch durch die Schweißelektrode 3a geglüht werden, um bessere Verbindungsergebnisse zu erzielen. Da sowohl die Schwenkbewegung als auch die Hubbewegung des Führungsarms 4 und auch die Transversalbewegung der Schweißelektrode 3a durch rechnergesteuerte Motoren (6b, 17,18) vorgenommen wird, ist eine Vielzahl von Bewegungen sowohl beim Schweißen, aber insbesondere beim Glühen möglich.

Sowohl während des Schweißens als auch während des Glühens oder nur in jeweils einem Arbeitsschritt wird aus der Aussparung 15, in der die Schweißelektrode verfahren werden kann, Luft von einer Ansaugöffnung 24 durch die Bohrung 14 in die hohle Achse 7 mittels eines Gebläses abgesaugt. Durch diese Absaugung werden die Gase, die beim Schweißen entstehen oder für das Schweißen zugeführt werden, gefiltert und nach außen geführt oder in dem Gerät gesammelt, um entsorgt oder einer Wiederverwendung zugeführt zu werden. Eine geschlossen Haube zur Abführung der beim Schweißen entstehenden Gase ist nicht erforderlich.

Nach dem Verschweißen kann die Schweißnaht auch verpresst werden. Dies ist gerade bei stark auftragenden Schweißnähten vorteilhaft. In einem solchen Fall wird der Führungsarm 4 erneut angehoben, so dass sich die Schweißelektrode 3a von dem nun geschweißten Band entfernt. Der Führungsarm wird so verschwenkt, dass der Schenkel 4b mit der Verpressbrücke 11 in dem Arbeitsbereich über der Schweißnaht zu stehen kommt. Die Verpressbrücke 11 wird nun mit dem Führungsarm 4 abgesenkt und, da die Schneidevorrichtung 10 sich nun tiefer in der Grundplatte befindet, dieses mal nicht aus dem Arbeitsbereich nach oben gedrückt. Die Verpressbrücke 11 wird in Öffnungen der Grundplatte 8 eingeführt und dort mit Bolzen verriegelt. Daraufhin bewegt sich die Schneidevorrichtung nach oben und drückt mit ihrer abgeflachten Oberseite gegen das Band 2 und somit das Band 2 gegen die Verpressbrücke 11. Da sich die auftragende Schweißnaht zwischen der Verpressbrücke und der Oberseite 20 der Schneidevorrichtung 10 befindet, wird die Schweißnaht verpresst. Nach dem Verpressen wird die Schneidevorrichtung 10 wieder vom Band weg verfahren, die Verpressbrücke 11 entriegelt und der Führungsarm 4 nach oben gehoben und entweder in der Stellung gehalten oder in eine Ruhestellung bewegt. Die Bandführungen 16 können nun das Band 2 freigeben und das geschweißte Band 2 kann entnommen werden.

### Bezugszeichenliste

- 1: Vorrichtung zum Schweißen
- 2: Band
- 3: Schweißmittel
- 3a: Schweißelektrode
- 3b: Halterung der Schweißelektrode
- 4: Führungsarm
- 4a, 4b: Schenkel des Führungsarms
- 5: Stabmittel
- 6: Linearantrieb
- 6a: Getriebe
- 6b: Aktor
- 7: Achse
- 8: Grundplatte
- 9: Bildschirm
- 10: Schneidevorrichtung
- 11: Verpressbrücke
- 11a, 11b: Schenkel, der Verpressbrücke
- 11c: Verbindungselement zwischen den Schenkeln
- 12: Federelement
- 13: Niederhalter
- 14: Bohrung
- 15: Aussparung
- 16: Bandführung
- 17: Aktor
- 18: Aktor
- 19: Gehäuse
- 20: Oberseite der Schneidevorrichtung
- 21: Führung
- 22: Getriebe
- 23: Getriebe
- 24: Ansaugöffnung
- 25: Schneidkante
- 26: Schneidkante
- 27: Öffnung

## Patentansprüche

1. Vorrichtung (1) zum Schweißen von Bandmaterial umfassend einen Führungsarm (4) zum Führen mindestens einer Schweißelektrode (3a) und mit einer Absaugvorrichtung zum Absaugen von Gasen, wobei mittels des Führungsarms (4) mindestens eine Absaugöffnung der Absaugvorrichtung in mindestens einer Ebene im wesentlichen horizontal zur Bandlaufrichtung um eine Achse (7) des Führungsarms (4) schwenkbar ist,
**dadurch gekennzeichnet, dass** die Achse (7) hohl ist und zum Transport der Gase dient.

2. Vorrichtung nach Anspruch 1, **dadurch gekennzeichnet, dass** die Absaugvorrichtung ein Gebläse umfasst, das einen Unterdruck an der Absaugöffnung bereitstellt und die abgesaugten Gase weiterleitet.

3. Vorrichtung nach Anspruch 1 oder 2, **dadurch gekennzeichnet, dass** die Absaugöffnung in eine Aussparung (15) im Führungsarm (4) mündet, die zu der Führung der Schweißelektrode benachbart ist und/oder diese umgibt.

4. Vorrichtung nach einem der vorhergehenden Ansprüche, **dadurch gekennzeichnet, dass** Aktoren (17,18) vorgesehen sind, die den Führungsarm (4) eine Hub- und/oder Schwenkbewegung ausführen lassen können.

5. Vorrichtung nach einem der vorhergehenden Ansprüche, **dadurch gekennzeichnet, dass** eine Gasleitung vorgesehen ist, die Gase an die Außenseite einer Geräteabdeckung leitet.

## Claims

1. Device (1) for welding a strip of material, comprising a guide arm (4) for guiding at least one welding electrode (3a) and a suction device for evacuating gases, wherein, by means of the guide arm (4), at least one suction opening of the suction device is pivotable about an axle (7) of the guide arm (4) in at least one plane essentially horizontal to the running direction of the strip,
**characterised in that** the axle (7) is hollow and serves to transport the gases.

2. Device according to claim 1, **characterised in that** the suction device comprises a blower which provides a vacuum at the suction opening and conveys the evacuated gases.

3. Device according to claim 1 or 2, **characterised in that** die suction opening leads to a recess (15) in the guide arm (4) which adjoins the guide of the welding electrode and/or surrounds it.

4. Device according to one of the preceding claims, **characterised in that** actuators (17, 18) are provided which can cause the guide arm (4) to perform a lifting movement and/or pivoting movement.

5. Device according to one of the preceding claims, **characterised in that** a gas line is provided which directs the gases to the outside of the equipment cover.

## Revendications

1. Dispositif (1) pour le soudage d'un matériau en bande comprenant un bras de guidage (4) pour guider au moins une électrode de soudage (3a) et ayant au moins un dispositif d'aspiration pour l'aspiration des gaz, dans lequel au moins un orifice d'aspiration du dispositif d'aspiration est susceptible de pivoter au moyen du bras de guidage (4) autour d'un axe (7) du bras de guidage (4) dans au moins un plan essentiellement horizontal par rapport à la direction de déplacement de la bande, **caractérisé en ce que** l'axe (7) est creux et sert au transport des gaz.

2. Dispositif selon la revendication 1, **caractérisé en ce que** le dispositif d'aspiration comprend un ventilateur qui crée une dépression au niveau de l'orifice d'aspiration et éloigne les gaz aspirés.

3. Dispositif selon la revendication 1 ou 2, **caractérisé en ce que** l'orifice d'aspiration débouche dans un évidement (15) du bras de guidage (14) qui est voisin du guidage de l'électrode de soudage et/ou entoure cette dernière.

4. Dispositif selon l'une quelconque des revendications précédentes, **caractérisé en ce que** des organes d'actionnement (17,18) sont prévus, lesquels peuvent faire effectuer au bras de guidage (4) un mouvement de levage et/ou un mouvement de pivotement.

5. Dispositif selon l'une quelconque des revendications précédentes, **caractérisé en ce qu'**une conduite de gaz est prévue et conduit les gaz sur le côté extérieur d'un couvercle d'appareil.
